# FASCICULE DE BREVET EUROPEEN

(11) **EP 0 603 035 B1**
(45) Date de publication et mention de la délivrance du brevet: **07.04.1999**
(21) Numéro de dépôt: 93402984.4
(22) Date de dépôt: 10.12.1993
(51) Int. Cl.: B32B 31/00, B32B 31/18

(54) **Procédé de plastification de documents découpés dans une feuille**
Verfahren zum Einschweissen von Dokumenten, geschnitten aus folienförmigem Material
Process for laminating documents cut from sheet material

(30) Priorité: 15.12.1992 FR 9215083
(43) Date de publication de la demande: 22.06.1994
(73) Titulaire: THOMSON-CSF, 75008 Paris (FR)
(72) Inventeur: Tisserand, Georges, THOMSON-CFS, F-92402 Courbevoie Cedex (FR); Tisserand, Jacques, THOMSON-CFS, F-92402 Courbevoie Cedex (FR)
(74) Mandataire: Benoit, Monique

(56) Documents cités:
- DE-A- 3 232 060
- US-A- 4 878 971

## Description

La présente invention concerne un procédé de plastification de documents découpés dans une feuille. Elle s'applique notamment à la plastification de documents originaux tels que des cartes d'identité ou tout autre document d'identification. Plus généralement, elle s'applique à la plastification de documents imprimés sur une feuille et dont il est nécessaire de sauvegarder l'état pour des raisons de sécurité ou de fiabilité.

La qualité de plastification de documents d'identification participe notamment à la sécurité et à la fiabilité que doivent procurer ces derniers. Différents critères concourent à définir cette qualité. Parmi ceux-ci, la régularité des bords de plastique joue un rôle important. Il importe en effet que le document, une carte d'identification de forme rectangulaire par exemple, soit bien centré au milieu du rectangle de plastique la recouvrant pour des raisons de reconnaissance automatique ou de fiabilité du document par exemple.

Il existe des procédés connus de plastification permettant d'obtenir ce dernier critère de qualité. Cependant ces procédés sont mis en oeuvre au moyen de machines complexes et coûteuses, adaptées notamment à des productions centralisées traitant de grandes quantités de documents. Ces machines font notamment appel à des moyens automatiques de repérage de la position des cartes par rapport aux bandes de plastique les recouvrant, ce repérage étant par exemple effectué par rapport aux bords du document à plastifier et à des moyens de découpe de bandes de recouvrement en plastique.

Un autre moyen procédé connu consiste à positionner manuellement les documents et à vérifier visuellement leur positionnement. Outre les risques d'erreurs de positionnement inhérents à ce type d'activité humaine, un tel procédé est incompatible avec une production supérieure à quelques unités.

Une méthode incluant l'utilisation de points de repérage et l'emploi d'un dispositif de guidage de moyens de découpe basée sur le repérage de ces points, est divulguée dans le demande de brevet allemand DE 32 32 060 A1.

Le but de l'invention est de palier les inconvénients précités, notamment en permettant d'obtenir de façon simple et fiable des bords de plastique réguliers.

A cet effet, l'invention a pour objet un procédé de plastification d'un document tel que défini par la revendication 1.

L'invention a pour principaux avantages qu'elle est adaptée à tous types de production de documents plastifiés, notamment semi-industriels, qu'elle est simple à mettre en oeuvre et qu'elle est économique.

D'autres caractéristiques et avantages de l'invention apparaîtront à l'aide de la description qui suit faite en regard des dessins annexés qui représentent :
- les figures 1a, 1b, 1c, des illustrations du principe du procédé selon l'invention ;
- les figures 2a, 2b, 2c et 2d, une illustration d'un exemple de mise en oeuvre possible du procédé selon l'invention ;
- les figures 3a, 3b et 4, une application comprenant plusieurs documents à plastifier.

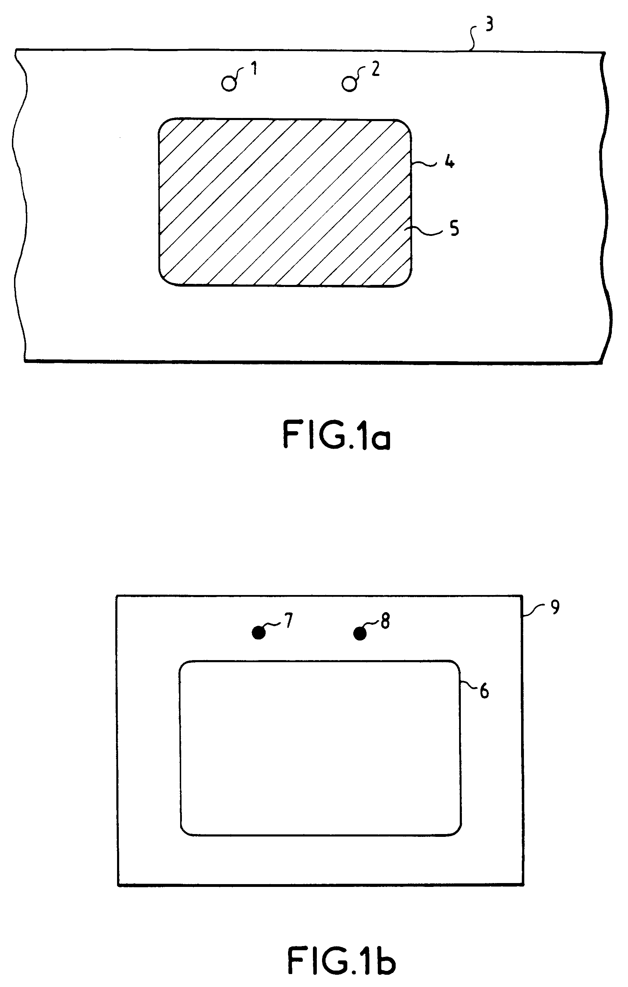

Les figures 1a, 1b et 1c illustrent le principe du procédé selon l'invention.

La figure la montre un document 5, fixé sur une première couverture en plastique 3, une bande de plastique par exemple. Au moins deux repères 1, 2, par exemple ponctuels, sont réalisés sur la première couverture 3. Les positions des premiers repères 1, 2 sont préalablement définis par rapport à une première ligne de découpe 4 qui est la ligne de découpe du document 5 à plastifier, ce document étant préalablement découpé dans une feuille. Le document est fixé à la première couverture 3, de préférence à l'intérieur de la ligne de découpe 4. Cela peut être obtenu par exemple en plaçant la première couverture 3 juste en sortie d'une matrice de découpe du document 5. Il n'est pas obligatoire que le document 5 reste à l'intérieur de sa ligne de découpe 4, cependant il faut que sa position sur la première couverture 3 soit définie par rapport à la ligne de découpe 4. Avant ou après la réalisation des premiers repères 1, 2 sur la première couverture 3, une deuxième couverture en plastique, non représentée, est fixée au verso du document 5. Si la deuxième couverture est fixée après la réalisation des premiers repères, elle est placée de façon à ne pas les cacher. Si la deuxième couverture est fixée avant la réalisation des premiers repères, ceux-ci peuvent par exemple être réalisés sur les deux couvertures à la fois. La fixation des couvertures sur le document peut par exemple être réalisée par des points de chauffage.

La figure 1b montre une deuxième ligne de découpe 6 qui est la ligne de découpe de l'ensemble constitué par le document et ses deux couvertures en plastique. Cette deuxième ligne de découpe 6 est pas exemple constituée par les bords d'une matrice ou d'un poinçon de découpe. La position de la deuxième ligne de découpe 6 est fixe et définie par rapport à au moins deux seconds repères 7, 8 par exemple situés sur un module de découpe 9 comprenant la deuxième ligne de découpe 6. Ces deux repères 7, 8 sont par exemple ponctuels. Les positions relatives des seconds repères 7, 8 sont identiques aux positions relatives des premiers repères 1, 2.

La figure 1c présente la superposition du module de découpe 9 et de l'ensemble du document 5 et de ses couvertures en plastique dont une seule 3 est représentée. La deuxième ligne de découpe 6 de l'ensemble 3, 5 encadre la première ligne de découpe 4 du document. Selon l'invention, afin d'obtenir des bords de plastique réguliers autour de document 5 plastifié, la découpe de l'ensemble du document et de ses couvertures n'est effectuée que lorsqu'il y a concordance entre les premiers repères 1, 2 et les seconds repères 7, 8, les positions des premiers repères 1, 2 par rapport à la première ligne de découpe 4 et la position de la deuxième ligne de découpe 6 par rapport aux positions des seconds repères 7, 8 ayant été définies de façon à obtenir cette régularité. Cependant, ces positions pourraient préalablement être définies de façon à obtenir un placement différent du document par rapport à sa protection en plastique, de façon par exemple à obtenir des bords en plastique de largeurs différentes d'un côté à l'autre. La première ligne de découpe 4 peut être par exemple à l'intérieur de la deuxième ligne de découpe 6 comme l'illustre la figure 1c.

Toutefois les deux lignes de découpe peuvent être confondues si des bords en plastique ne sont pas souhaités. La deuxième ligne de découpe 6 peut aussi par exemple être à l'intérieur de la première ligne de découpe 4, dans ce cas le document est découpé une nouvelle fois. Dès lors que les positions relatives des premiers repères entre eux et des seconds repères entre eux sont identiques, les positions des premiers repères sur la première couverture en plastique peuvent être quelconques par rapport à la première ligne de découpe 4, la ligne de découpe du document 5, à condition que ces positions soient fixes et définies par rapport à cette première ligne de découpe 4. Les premiers repères peuvent par exemple être à l'intérieur de cette dernière, donc à l'intérieur du document 5. Les premiers 1, 2 et seconds 7, 8 repères peuvent être par exemple des trous ou des points de marquage.

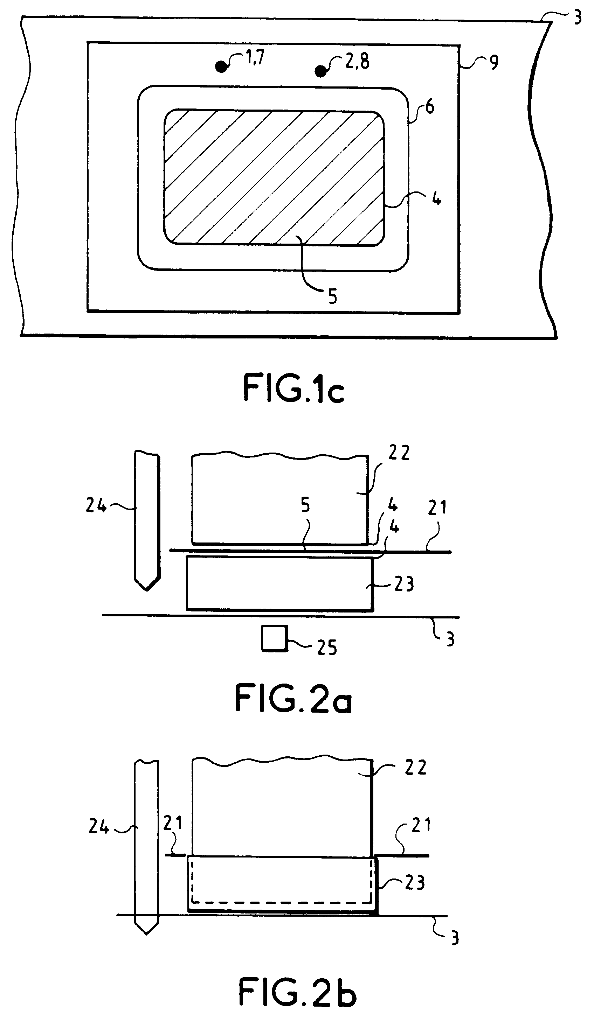

Les figures 2a à 2d illustrent un exemple de mise en oeuvre possible du procédé selon l'invention. La figure 2a présente une feuille 21 placée entre un premier poinçon 22 de découpe et sa matrice associée 23. La découpe du document 5 contenu sur la feuille 21 est obtenu par le passage du premier poinçon 22 à travers sa matrice 23, le document 5 étant placé entre ces deux derniers. Au premier poinçon 22 sont couplés deux poinçons auxiliaires dont un seul 24 est représenté, l'autre étant caché par ce dernier.

Les positions des poinçons auxiliaires 24 et du premier poinçon 22 sont fixes entre elles dans un plan perpendiculaire à leur commune direction de déplacement. La première couverture de plastique 3 devant être fixée au recto du document 5 est par exemple placée juste en dessous, au contact, de la matrice 23 de façon à ce qu'en sortie de cette dernière, le document 5 poussé par le premier poinçon 22, soit posé directement sur cette première couverture 3. Cela permet notamment de bien conserver la position du document 5 à l'intérieur de sa ligne de découpe 4 constituée par les bords en vis à vis du premier poinçon 22 et de sa matrice 23. A l'instant de la dépose du document 5 sur la première couverture 3, un élément chauffant 25 situé à proximité et en dessous de celle-ci permet par exemple de la fixer sur le document par un point de chauffage, la plastification totale du recto du document pouvant par exemple être réalisée ultérieurement.

La première couverture 3 est par exemple une bande de plastique dont la face d'adhérence, tournée vers le document à plastifier, est par exemple en polyéthylène, et dont la face extérieure est par exemple en polyester, la température de ce dernier matériau n'étant pas sensible à la température de scellage de la face d'adhérence. La couverture peut être en tout autre matériau en plastique scellable à chaud, par exemple au moyen de systèmes connus de l'homme du métier. Dans le cas où la première couverture 3 est constituée d'une bande en plastique défilant sous la matrice 23, la bande ne peut pas être située juste en dessous, au contact de la matrice 23 pour des raisons de frottement notamment. Un espacement étant ménagé entre la matrice et la bande, il est alors possible de prévoir un système soulevant cette bande au moment de la sortie d'un document de la matrice 23, la bande étant alors au contact de cette dernière au moment de la dépose du document.

Simultanément au passage du premier poinçon 22 dans sa matrice 23, donc simultanément à la découpe du document 5, les poinçons auxiliaires 24 se déplacent dans le même sens que le premier poinçon 22 de façon à percer deux trous dans la première couverture 3 comme l'illustre la figure 2b, ces trous faisant office de premiers repères 1, 2 précités.

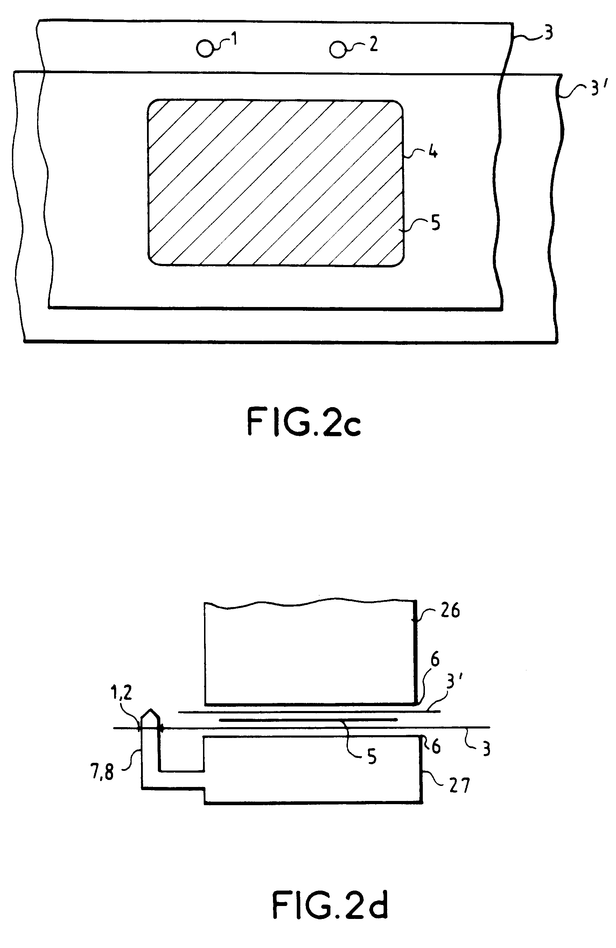

La figure 2c illustre un exemple de positionnement d'une deuxième couverture de plastique 3' au verso du document 5, les trous 1, 2 ayant été réalisés sur la première couverture 3 et celle-ci étant fixée au recto du document 5. La deuxième couverture 3' est par exemple fixée sur le document 5 de façon à ne pas couvrir les trous 1, 2 et à couvrir entièrement le document.

La figure 2d illustre le positionnement de l'ensemble constitué du document 5 et de ses deux couvertures 3, 3' juste avant la découpe de cet ensemble par un deuxième poinçon 26 et sa matrice associée 27. L'ensemble 5, 3, 3' est positionné de façon à ce que les trous 1, 2 précédemment effectués soient engagés autours de plots dont un seul 7, 8 est représenté, l'autre étant caché par ce dernier. Ces plots ont un diamètre sensiblement égal à celui des trous. lls sont fixes par rapport à la projection de la ligne de découpe 6 de l'ensemble dans un plan perpendiculaire à la direction de déplacement du deuxième poinçon 26, cette ligne de découpe 6 étant définie par les bords en vis à vis du deuxième poinçon 26 et de sa matrice 27. Les deux plots 7, 8 sont par exemple solidaires mécaniquement de cette matrice 27. Ces deux plots font office des seconds repères 7, 8 précités. Ils ont par exemple un sommet conique pour s'engager facilement dans les trous 1, 2 de la première couverture en plastique 3. Une fois la correspondance effectuée entre les trous 1, 2 et les plots 7, 8 précités par l'engagement de ces derniers dans les premiers, la découpe de l'ensemble du document 5 et de ses couvertures 3, 3' peut être réalisée. Les trous 1, 2 et les plots 7, 8 ayant des positions relatives entre eux identiques, les positions des trous 1, 2 et donc des poinçons auxiliaires 24 par rapport au premier poinçon 22 et les positions des plots 7, 8 par rapport au deuxième poinçon 26 ou à sa matrice associée 27 sont telles qu'elles permettent par exemple l'obtention de bords de plastique réguliers autour du document 5.

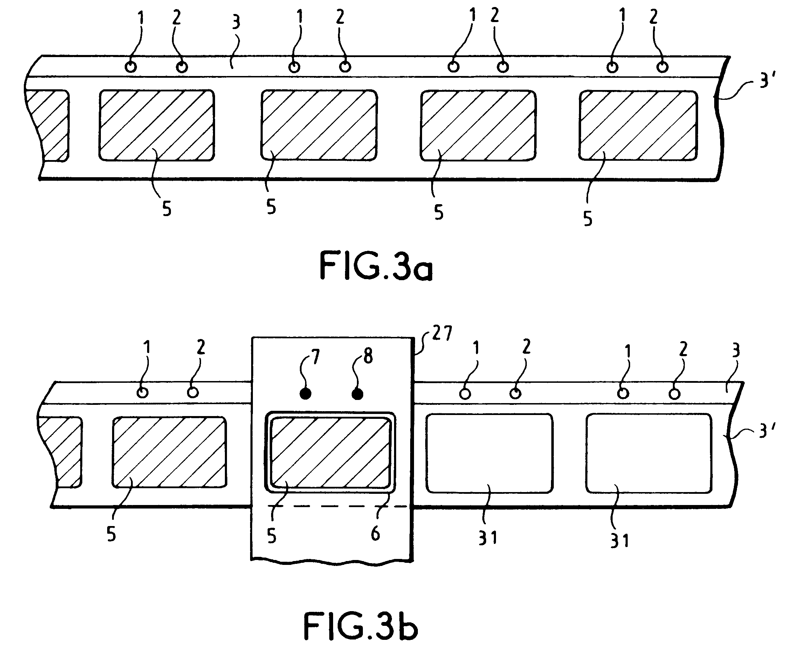

Les figures 3a et 3b illustrent un cas d'application du procédé selon l'invention où les documents à plastifier 5 sont fixés à la suite, après découpe, sur une première bande en plastique 3 comme le montre la figure 3a, la bande défilant par exemple sous un système de découpe du type de celui de la figure 2a. Des trous 1, 2 sont réalisés simultanément à la fixation du recto de chaque document 5 sur la bande. Une deuxième bande en plastique 3' est fixée au verso des documents 5 en recouvrant ceux-ci sans recouvrir les trous 1, 2. Ces derniers sont par exemple réalisés conformément à la méthode précitée relative aux figures 2a et 2b.

La figure 3b présente la découpe des documents plastifiés, c'est à dire des documents 5 et des bandes en plastique 3, 3' tels que présentés par la figure 3a. La matrice de découpe 27 associée au deuxième poinçon 26 est représentée au-dessus des bandes 3, 3', un document 5 étant prêt à être découpé avec les bandes en plastique 3, 3'. Les plots 7, 8 solidaires mécaniquement de la matrice 27 sont engagés dans les trous associés au document à découper de façon par exemple à ce que ce document 5 soit bien centré au milieu de la ligne de découpe 6. Après passage au niveau de la matrice 27, des trous 31 apparaissent dans les bandes 3, 3' correspondant à l'emplacement des documents plastifiés découpés.

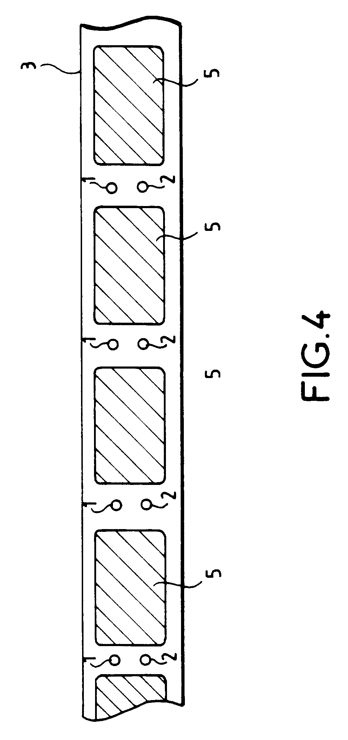

La figure 4 présente une autre position possible des trous 1, 2 sur la première bande en plastique 3. Ces derniers sont par exemple réalisés entre les documents 5. Dans ce cas, la deuxième bande en plastique 3' possède par exemple des trous de dimensions supérieures aux précédents 1, 2 de façon à ce que cette deuxième bande ne recouvre pas les trous 1, 2 réalisés dans la première bande 3.

Les trous 1, 2 peuvent encore être placés différemment sur la première bande en plastique 3. Ils peuvent notamment être placés à l'intérieur du document 5 si un gain de place est nécessaire sur la bande, dans un but d'économie par exemple.

Le procédé selon l'invention est applicable par exemple si un document est plastifié sur une seule face, une deuxième couverture en plastique n'étant pas alors fixée au verso du document. Dans ce cas, la couverture en plastique et le document peuvent par exemple être découpés de façon à ce qu'ils soient bord à bord.

Les repères ponctuels 1, 2, 7, 8 précités peuvent être inclus dans des repères qui ne se réduisent pas à des points tels que des trous ou des poinçons circulaires notamment. A titre d'exemple, les repères 7, 8 peuvent être inclus dans un poinçon de section rectangulaire et les repères correspondants 1, 2 peuvent être inclus dans un trou rectangulaire épousant la forme du poinçon à section rectangulaire. Les repères 1, 2 réalisés dans la première couverture en plastique 3 et les repères 7, 8 liés à la deuxième ligne de découpe 6 peuvent être donc par exemple respectivement inclus dans un seul repère réalisé sur la première couverture 3 et un seul repère lié à la deuxième ligne de découpe 6, la découpe du document plastiqué ayant lieu quand il y a concordance entre ces deux seuls repères. Cependant, il n'en reste pas moins que la concordance de ces derniers implique la concordance d'au moins deux repères ponctuels du repère de la couverture 3 avec au moins deux repères ponctuels du repère liés à la deuxième ligne de découpe 6, ces repères ponctuels étant bien définis, l'inclusion de deux repères ponctuels dans un seul repère étant due par exemple à des facilités de mise en oeuvre.

## Revendications

1. Procédé de plastification d'un document, dans lequel un document (5) est découpé dans une feuille (21) par des premiers moyens de découpe (22, 23) puis fixé sur une couverture en plastique (3) pour former un ensemble (3, 5) et cet ensemble est découpé par des deuxièmes moyens de découpe (26, 27) lorsqu'il y a concordance entre des premiers (1, 2) et des seconds (7, 8) repères et dans lequel, plus particulièrement:
- dans une première étape, la feuille (21) portant le document (5) est placée entre un premier poinçon (22) et sa matrice associée (23), le document (5) est découpé selon une première ligne de découpe (4) par le passage du poinçon (22) à travers la matrice (23) pour être reçu sur la couverture en plastique (3) placée au contact ou à proximité immédiate en dessous de la matrice (23) et, simultanément, des poinçons auxiliaires (24) se déplacent vers et à travers la couverture (3) pour réaliser au moins deux trous (1, 2) dans la couverture, la position des poinçons auxiliaires (24) étant fixe dans un plan perpendiculaire à la direction de déplacement du premier poinçon (22) et lesdits trous (1, 2) constituant les premiers repères dont la position est définie par rapport à la première ligne de découpe et le document (5) est fixé sur la couverture (3) pour former l'ensemble (3, 5) à découper ;
- dans une deuxième étape, l'ensemble (3, 5) est découpé selon une deuxième ligne de découpe (6) dont la position est définie par rapport aux seconds repères (7, 8) amenés en concordance avec les premiers repères, l'ensemble étant laminé par application de pression et de chaleur juste avant, pendant ou après le découpage selon la deuxième ligne de découpe.

2. Procédé selon la revendication 1 caractérisé en ce qu'une deuxième couverture en plastique (3') est fixée sur la face du document (5) opposée à la première couverture (3) de façon à ne pas couvrir les premiers repères (1, 2) réalisés sur cette dernière, le document (5) et les deux couvertures (3, 3') formant l'ensemble à découper.

3. Procédé selon l'une quelconque des revendications précédentes, caractérisé en ce que les deuxième moyens de découpe comportent un deuxième poinçon (26) et sa matrice associée (27) et les second repères sont constitués par au moins deux pots (7, 8) solidaires mécaniquement de cette matrice (27), la découpe étant réalisée quand les pots (7, 8) sont engagés dans les trous (1, 2).

4. Procédé selon l'une quelconque des revendications précédentes, caractérisé en ce que la couverture en plastique (3) est une bande en plastique sur laquelle sont fixés plusieurs documents (5) à la suite.

5. Procédé selon la revendication 8, caractérisé en ce que les trous (1, 2) sont réalisés entre les documents (5).

## Claims

1. Process for laminating a document in which a document (5) is cut from a sheet (21) by first cutting means (22, 23) and then fastened to a plastic cover (3) in order to form an assembly (3, 5), and this assembly is cut by second cutting means (26, 27) when there is correspondence between first reference marks (1, 2) and second reference marks (7, 8), in which process, more particularly:
- in a first step, the sheet (21) bearing the document (5) is placed between a first punch (22) and its associated die (23), the document (5) is cut along a first cutting line (4) by the punch (22) passing through the die (23) in order to be housed on the plastic cover (3) placed in contact with the die (23) or placed immediately below the latter, and, simultaneously, auxiliary punches (24) move towards and through the cover (3) in order to produce at least two holes (1, 2) in the cover, the position of the auxiliary punches (24) being fixed in a plane perpendicular to the direction of movement of the first punch (22) and the said holes (1, 2) constituting the first reference marks, the position of which is defined with respect to the first cutting line, and the document (5) is fastened to the cover (3) in order to form the assembly (3, 5) to be cut;
- in a second step, the assembly (3, 5) is cut along a second cutting line (6), the position of which is defined with respect to the second reference marks (7, 8) brought into correspondence with the first reference marks, the assembly being laminated by applying pressure and heat just before, during or after cutting along the second cutting line.

2. Process according to Claim 1, characterized in that a second plastic cover (3') is fastened to that face of the document (5) which is opposite the first cover (3) so as not to cover the first reference marks (1, 2) produced on the latter, the document (5) and the two covers (3, 3') forming the assembly to be cut.

3. Process according to either of the preceding claims, characterized in that the second cutting means comprise a second punch (26) and its associated die (27) and the second reference marks consist of at least two studs (7, 8) mechanically integral with this die (27), the cutting being carried out when the studs (7, 8) are engaged in the holes (1, 2).

4. Process according to any one of the preceding claims, characterized in that the plastic cover (3) is a plastic strip to which several documents (5) are subsequently fastened.

5. Process according to Claim 8, characterized in that the holes (1, 2) are produced between the documents (5).

## Patentansprüche

1. Verfahren zum Einschweißen eines Dokuments in Kunststoff, bei dem ein Dokument (5) durch erste Ausschneidemittel (22, 23) aus einem Blatt (21) ausgeschnitten wird, dann auf einer Kunststoffschutzfolie (3) angebracht wird, um eine Einheit (3, 5) zu bilden, und die Einheit durch zweite Ausschneidemittel (26, 27) jedesmal dann ausgeschnitten wird, wenn es eine Übereinstimmung zwischen ersten Paßmarkierungen (1, 2) und zweiten Paßmarkierungen (7, 8) gibt, und darüber hinaus
- während eines ersten Schritts das das Dokument (5) tragende Blatt (21) zwischen einen ersten Stempel (22) und seine dazugehörige Matrix (23) gesetzt wird, wobei das Dokument (5) entsprechend einer ersten Schnittlinie (4) beim Lauf des Stempels (22) durch die Matrix (23) ausgeschnitten wird, um auf der Kunststoffschutzfolie (3) aufgenommen zu werden, die in Kontakt zur Matrix (23) oder in unmittelbarer Nähe unter der Matrix (23) angeordnet ist, und gleichzeitig sich zwei Hilfsstempel (24) zur und durch die Schutzfolie (3) bewegen, um wenigstens zwei Löcher (1, 2) in der Schutzfolie zu erzeugen, wobei die Position der Hilfsstempel (24) in einer Ebene festgelegt ist, die senkrecht zur Bewegungsrichtung des ersten Stempels (22) liegt, und die Löcher (1, 2) die ersten Paßmarkierungen darstellen, deren Position in Beziehung zu der ersten Schnittlinie definiert ist, und das Dokument (5) auf der Schutzfolie (3) angebracht ist, um die zu zerschneidende Einheit (3, 5) zu bilden; und
- während eines zweiten Schritts die Einheit (3, 5) entsprechend einer zweiten Schnittlinie (6) ausgeschnitten wird, deren Position in Beziehung zu den zweiten Paßmarkierungen (7, 8) definiert ist, die in Übereinstimmung zu den ersten Paßmarkierungen zugeführt werden, wobei die Einheit unter Ausübung von Druck und Einwirkung von Wärme direkt vor, während oder nach dem Ausschneiden entsprechend der zweiten Schnittlinie gewalzt wird.

2. Verfahren nach Anspruch 1, dadurch gekennzeichnet, daß eine zweite Kunststoffschutzfolie (3') auf der der ersten Schutzfolie (3) gegenüberliegenden Seite des Dokuments (5) in der Weise angebracht wird, daß sie die zwei in der letzteren erzeugten Paßmarkierungen (1, 2) nicht bedeckt, wobei das Dokument (5) und die zwei Schutzfolien (3, 3') die zu zerschneidende Einheit bilden.

3. Verfahren nach einem der vorhergehenden Ansprüche, dadurch gekennzeichnet, daß die zweiten Ausschneidemittel einen zweiten Stempel (26) und seine dazugehörige Matrix (27) umfassen und die zweiten Paßmarkierungen durch wenigstens zwei Stifte (7, 8) gebildet werden, die mechanisch aus einem Stück mit der Matrix (27) gebildet sind, wobei das Ausschneiden dann erfolgt, wenn die Stifte (7, 8) in die Löcher (1, 2) eingreifen.

4. Verfahren nach einem der vorhergehenden Ansprüche, dadurch gekennzeichnet, daß die Kunststoffschutzfolie (3) aus einem Kunststoffband besteht, auf dem hintereinander mehrere Dokumente (5) angebracht sind.

5. Verfahren nach Anspruch 4, dadurch gekennzeichnet, daß die Löcher (1, 2) zwischen den Dokumenten (5) hergestellt sind.
